# EUROPEAN PATENT APPLICATION

(11) **EP 4 095 023 A1**
(43) Date of publication of application: **30.11.2022**
(21) Application number: 21743653.4
(22) Date of filing: 20.01.2021
(51) Int. Cl.: B62J 37/00, B62K 11/00, B62J 40/10

(54) **MANUAL-TRANSMISSION STRADDLED VEHICLE**

(30) Priority: 21.01.2020 WO PCT/JP2020/001910
(71) Applicant: Yamaha Hatsudoki Kabushiki Kaisha, Iwata-shi, Shizuoka 438-8501 (JP)
(72) Inventor: KATANO, Wataru, Iwata-shi, Shizuoka 438-8501 (JP)
(74) Representative: Grünecker Patent- und Rechtsanwälte PartG mbB
(86) International application number: PCT/JP2021/001812
(87) International publication number: WO 2021/149708

(57) **Abstract**

The present teaching provides an MT straddled vehicle that has more flexibility in arrangement of a canister and some other components in a region enclosed by a crankcase, a cylinder and an air-intake system when the MT straddled vehicle is viewed along the crankshaft axial direction. An MT straddled vehicle according to the present teaching includes an engine provided to a frame in such a manner that the cylinder is in an upright posture; a starter motor that is located at one end of a crankshaft and starts the engine, the starter motor additionally functioning as a generator that generates electricity when driven by the engine; and a canister that is located in such a manner that at least part of the canister is in a region enclosed by the crankcase, the cylinder and the air-intake system when viewed along a crankshaft axial direction and said part of the canister is on a centerline when the MT straddled vehicle is viewed downward from above, the centerline being a line passing through a center of the MT straddled vehicle with respect to a vehicle width direction and extending in a forward-backward direction.

## Description

### Technical Field

The present teaching relates to an MT (manual transmission) straddled vehicle.

### Background Art

A vehicle containing a canister that temporarily stores vaporized fuel generated in a fuel tank has been known as an MT (manual transmission) straddled vehicle with a manual multistage transmission. For example, Patent Literature 1 discloses an MT straddled vehicle including a manual transmission and a canister. In the MT straddled vehicle disclosed in Patent Literature 1, the canister is located above a starter motor that starts the engine. When the MT straddled vehicle disclosed in Patent Literature 1 is viewed along the crankshaft axial direction, the canister is located in a region enclosed by a crankcase encasing the crankshaft, a cylinder of the engine, and an air-intake system that supplies air to the engine.

### Citation List

### Patent Literature

Patent Literature 1: Japanese Patent Application Publication No. 2012-211553

### Summary of Invention

### Technical Problem

In an MT straddled vehicle, many components for engine operation are located in a region that is enclosed by a crankcase, a cylinder and an air-intake system when viewed along the crankshaft axial direction. There is a desire for more flexibility in arrangement of these components. An object of the present teaching is to provide an MT straddled vehicle that has more flexibility in arrangement of a canister and some other components in a region that is enclosed by a crankcase, a cylinder and an air-intake system when viewed along the crankshaft axial direction.

### Solution to Problem

The present inventor conducted a study on the arrangement of components in the region that is enclosed by the crankcase, the cylinder and the air-intake system when viewed along the crankshaft axial direction. For example, in the vehicle of Patent Literature 1, a chain tensioner is located in the region. In some cases, a thermostat of a cooling system, a throttle valve, etc. are located in the region. Thus, many components are located in the region, and the space is tight. If a canister is additionally located in the region, the arrangement of components will be more restricted.

The present inventor conducted a further study on the arrangement of components in the region that is enclosed by the crankcase, the cylinder and the air-intake system when viewed along the crankshaft axial direction. The present inventor focused on the function and position of a starter motor, which has been placed in the region. The starter motor functions to drive the crankshaft to start the engine. By relocating the starter motor to one end of the crankshaft as a motor that also functions as an electric generator, the starter motor can be removed from the above-described region while maintaining the function. By removing the starter motor from the region, it becomes possible to locate a canister in the space where the starter motor was originally located. Positioning the canister in the space originally for the starter motor provides more space in the region that is enclosed by the crankcase, the cylinder and the air-intake system when viewed along the crankshaft axial direction. This allows more flexibility in arrangement of components in the region that is enclosed by the crankcase, the cylinder and the air-intake system when the vehicle is viewed along the crankshaft axial direction.

In order to attain the object above, an MT straddled vehicle according to an aspect of the present teaching is configured as follows.

The MT straddled vehicle (1) includes:
a frame;
a fuel tank provided to the frame;
a multistage transmission that changes a gear ratio in multiple steps in accordance with operation;
an engine including: a piston; a crankshaft; a cylinder having a cylinder bore in which the piston is located in such a manner as to be capable of reciprocating motion; and a crankcase that is connected to the cylinder and encases the crankshaft and the multistage transmission, the engine being provided to the frame in such a manner that the cylinder is in an upright posture;
an air-intake system through which intake air is supplied to the engine;
a canister that temporarily stores vaporized fuel generated by fuel vaporization in the fuel tank and supplies the vaporized fuel to the engine; and
a starter motor that starts the engine,
wherein:
   the starter motor is located at one end of the crankshaft and additionally functions as a generator that generates electricity when driven by the engine; and
   the canister is located in such a manner that at least part of the canister is in a region enclosed by the crankcase, the cylinder and the air-intake system when viewed along a crankshaft axial direction and said part of the canister is on a centerline when the MT straddled vehicle is viewed downward from above, the centerline being a line passing through a center of the MT straddled vehicle with respect to a vehicle width direction and extending in a forward-backward direction.

The MT straddled vehicle (1) includes a frame, a fuel tank, a multistage transmission, an engine, an air-intake system, a canister, and a starter motor.

The engine includes a cylinder and a crankcase. The cylinder has a cylinder bore in which a piston is located in such a manner as to be capable of reciprocating motion. The engine is provided to the frame in such a manner that the cylinder is in an upright posture, and accordingly, for example, the centerline of the cylinder bore extends vertically. The crankcase is connected to the cylinder and encases a crankshaft and the multistage transmission. Accordingly, the piston reciprocates inside the cylinder, for example, in the vertical direction. For example, the crankshaft rotates as the piston reciprocates in the vertical direction. The rotation speed of the engine is changed in accordance with the gear ratio of the multistage transmission. The gear ratio is changed in multiple steps in accordance with operation.

The engine and the fuel tanks are provided to the frame. The air-intake system gives passage to intake air toward the engine.

The canister temporarily stores vaporized fuel generated by fuel vaporization in the fuel tank and supplies the vaporized fuel to the engine. This reduces a loss of vaporized fuel generated by fuel vaporization in the fuel tank.

The starter motor starts the engine. The starter motor is located at one end of the crankshaft of the engine. The starter motor also functions as a generator. The starter motor starts the engine, and after the start of the engine, the starter motor generates electricity.

The canister is located in such a manner that at least part of the canister is in a region enclosed by the crankcase, the cylinder and the air-intake system when viewed along a crankshaft axial direction and is on a centerline when the MT straddled vehicle is viewed downward from above. The centerline is a line passing through the center of the MT straddled vehicle with respect to the vehicle width direction and extending in the forward-backward direction.

In the MT straddled vehicle (1), the starter motor is located at one end of the crankshaft and also functions as a generator. This permits the MT straddled vehicle (1) to no longer need a conventional starter motor dedicated to starting the engine. Such a conventional starter motor dedicated to starting the engine needs to drive the crankshaft and therefore is located in a region that is enclosed by the crankcase, the cylinder and the air-intake system when viewed along the crankshaft axial direction and on the centerline when the MT straddled vehicle is viewed downward from above. In the MT straddled vehicle (1), the starter motor can be removed from the region that is enclosed by the crankcase, the cylinder and the air-intake system when viewed along the crankshaft axial direction. Accordingly, in the MT straddled vehicle (1), the canister can be positioned in the space that has been used for the conventional starter motor dedicated to starting the engine. Positioning the canister in the space that has been used for locating the conventional starter motor dedicated to starting the engine provides more space for other components, which allows more flexibility in arrangement of these components. These components are, for example, a chain tensioner, a thermostat, a throttle valve, and the like. Thus, the MT straddled vehicle (1) has more layout flexibility in arrangement of components in the region that is enclosed by the crankcase, the cylinder and the air-intake system when viewed along the crankshaft axial direction.

In a preferred embodiment of the MT straddled vehicle (1), the canister is located in a position offset laterally from the line passing through the center of the MT straddled vehicle with respect to the crankshaft axial direction and extending in the forward-backward direction. The conventional starter motor, which does not function as a generator, has been typically located in a position offset laterally away from the center of the cylinder. The conventional starter motor, which does not function as a generator, is generally similar to the canister in shape and/or size. Therefore, when the canister is located in a position offset laterally away from the center of the cylinder, the space in which the conventional starter motor has been located can be used more effectively for the canister. When the canister is located in such a manner as to extend across the regions on both sides of the centerline and the size of the part of the canister in one of the regions is not equal to the size of the part of the canister in the other region, it is an example of the case in which the canister is located in a position offset laterally from the centerline. When the engine is a single-cylinder engine, the center of the cylinder means the center of the cylinder bore of the single cylinder. When the engine is a multi-cylinder engine, 'the center of the cylinder' means the center of a line segment connecting the centers of the two outermost cylinder bores with respect to the crankshaft axial direction.

An MT straddled vehicle according to another aspect of the present teaching may be configured as follows.

The MT straddled vehicle (2) is the MT straddled vehicle of (1), further including a rear arm that is supported by the frame in such a manner as to be swingable,
wherein:
the frame includes a pivot that supports the rear arm; and
the air-intake system has a front part that is more frontward than a line passing through the pivot with respect to the forward-backward direction of the MT straddled vehicle; and when viewed along the crankshaft axial direction, the canister is located more downward than a lower contour line of the front part.

When the MT straddled vehicle (2) is viewed along the crankshaft axial direction, the canister is located more downward than the lower contour line of a part of the air-intake system that is more frontward, with respect to the forward-backward direction of the MT straddled vehicle, than a line passing through the pivot and extending in an upward-downward direction. When the canister is located more downward than the lower contour line of the air-intake system, the canister is not overlapped by the air-intake system when viewed along the crankshaft axial direction. Accordingly, in the MT straddled vehicle (2), the air-intake system is not overlapped by the canister in the crankshaft axial direction in the places where the driver's legs are positioned when the driver is putting his or her feet on the footsteps. Thus, not only does the MT straddled vehicle (2) have more flexibility in layout of components, but the MT straddled vehicle is inhibited from increasing in vehicle width, which allows the driver to settle his or her legs in comfortable positions.

An MT straddled vehicle according to another aspect of the present teaching may be configured as follows.

The MT straddled vehicle (3) is the MT straddled vehicle of (1) or (2), wherein:
the cylinder includes a cylinder body and a cylinder head; and
the canister is located in such a manner that when viewed along the crankshaft axial direction, at least part of the canister is more downward than a line passing through the rear end, with respect to the forward-backward direction of the MT straddled vehicle, of the boundary between the cylinder head and the cylinder body and extending in the forward-backward direction.

When the MT straddled vehicle (3) is viewed along the crankshaft axial direction, the canister is located in such a manner that at least part of the canister is more downward than a line passing through the rear end, with respect to the forward-backward direction of the MT straddled vehicle, of the boundary between the cylinder head and the cylinder body and extending in the forward-backward direction. Thus, the MT straddled vehicle (3) makes more efficient use of the space that has been used for the conventional starter motor.

An MT straddled vehicle according to another aspect of the present teaching may be configured as follows.

The MT straddled vehicle (4) is the MT straddled vehicle of any one of (1) to (3), wherein:
the air-intake system includes an air cleaner; and
the canister is located in such a manner that when the MT straddled vehicle is viewed downward from above, at least part of the canister is overlapped by the air cleaner.

When the MT straddled vehicle (4) is viewed downward from above, the canister is located in such a manner that the canister is overlapped by the air cleaner. Accordingly, in the MT straddled vehicle (4), the canister can be positioned in the space between the crankcase and the air cleaner. Thus, the MT straddled vehicle (4) makes still more efficient use of the space that has been used for the conventional starter motor.

An MT straddled vehicle according to another aspect of the present teaching may be configured as follows.

The MT straddled vehicle (5) is the MT straddled vehicle of any one of (1) to (4), wherein:
the canister has a shape having a longitudinal direction and a lateral direction; and
the canister is located in the region enclosed by the crankcase, the cylinder and the air-intake system when viewed along the crankshaft axial direction in such a manner that the longitudinal direction of the canister is same or substantially same as the crankshaft axial direction.

The canister of the MT straddled vehicle (5) has a shape having a longitudinal direction and a lateral direction, for example, has a cylindrical shape. In this case, the shape of the canister is similar to the shape of a starter motor. In the MT straddled vehicle (5), the canister is located in the region enclosed by the crankcase, the cylinder and the air-intake system when viewed along the crankshaft axial direction in such a manner that the longitudinal direction of the canister is same or substantially same as the crankshaft axial direction. Therefore, in the MT straddled vehicle (5), the canister can be positioned in the space obtained by the removal of the starter motor at a high spatial efficiency. As a result, in the MT straddled vehicle (5), various components can be arranged efficiently in the region enclosed by the crankcase, the cylinder and the air-intake system. The term "substantially the same" indicates accepting the design tolerance, manufacturing errors, and assembling errors.

An MT straddled vehicle according to another aspect of the present teaching may be configured as follows.

The MT straddled vehicle (6) is the straddled vehicle of any one of (1) to (4), wherein:
the frame includes at least a main frame; and
when viewed along the crankshaft axial direction, the canister is located more frontward than the front contour line of the main frame.

When the MT straddled vehicle (6) is viewed along the crankshaft axial direction, the canister is located more frontward than the front contour line of the main frame. Accordingly, in the MT straddled vehicle (6), the canister is not overlapped by the main frame when viewed along the crankshaft axial direction. Therefore, the straddled vehicle (6) is prevented from protruding in the crankshaft axial direction.

An MT straddled vehicle according to another aspect of the present teaching may be configured as follows.

The MT straddled vehicle (7) is the MT straddled vehicle of any one of (1) to (6), wherein the engine is a water-cooled engine.

For example, the temperature of the surface of a water-cooled engine is lower than the temperature of the surface of an air-cooled engine. The engine of the MT straddled vehicle (7) is a water-cooled engine, which has a low surface temperature, and therefore, if the canister is located near the engine, the canister is unlikely to be affected by the heat from the engine. Accordingly, in the MT straddled vehicle (7), it is possible to free more space around the canister by locating the canister closer to the engine. Thus, the MT straddled vehicle (7) has more flexibility in arrangement of components in the region enclosed by the crankcase, the cylinder and the air-intake system when viewed along the crankshaft axial direction.

An MT straddled vehicle according to another aspect of the present teaching may be configured as follows.

The MT straddled vehicle (8) is the MT straddled vehicle of any one of (1) to (7), wherein the engine includes a balancer that is located more frontward than a vertical line passing through the crankshaft axis when the MT straddled vehicle is viewed along the crankshaft axial direction.

When the balancer is provided to the engine, the balancer protrudes from the engine. In the MT straddled vehicle (8), the balancer is located more frontward than a vertical line passing through the crankshaft axis when viewed along the crankshaft axial direction. This means that the balancer is located away from the region enclosed by the crankcase, the cylinder and the air-intake system when viewed along the crankshaft axial direction. Therefore, the MT straddled vehicle (8) has improved spatial efficiency of the region enclosed by the crankcase, the cylinder and the air-intake system when viewed along the crankshaft axial direction.

An MT straddled vehicle according to another aspect of the present teaching may be configured as follows.

The MT straddled vehicle (9) is the MT straddled vehicle of any one of (1) to (8), further including:
a motor driver that supplies electric power to the starter motor; and
an electric cable that connects the motor driver and the starter motor,
wherein the electric cable is located in such a manner as not to overlap the canister when the straddled vehicle is viewed along the crankshaft axial direction.

In the MT straddled vehicle (9), the electric cable that connects the starter motor and the motor driver of the starter motor is located in such a manner as not to overlap the canister when viewed along the crankshaft axial direction. Accordingly, the MT straddled vehicle (9) prevents the electric cable from protruding in the crankshaft axial direction.

An MT straddled vehicle according to another aspect of the present teaching may be configured as follows.

The MT straddled vehicle (10) is the MT straddled vehicle of (9), wherein the electric cable includes: a core wire made of a conductor; a coating over the core wire; and a tube covering the coating.

In the MT straddled vehicle (10), the damage of the electric cable can be checked easily by checking on damage of the tube. Therefore, the MT straddled vehicle (10) is improved in maintainability.

An MT straddled vehicle according to another aspect of the present teaching may be configured as follows.

The MT straddled vehicle (11) is the MT straddled vehicle of (10), wherein:
the coating is made of an uncolored material; and
the tube is made of a colored material.

In the MT straddled vehicle (11), there can be an improvement in the visibility of the motor driver relative to the electric cable, which can facilitate the ability to notice any damage. Also, since the uncolored coating of the electric cable is covered with the colored tube, damage of the tube can be found easily. Accordingly, the straddled vehicle can be fixed without the electric cable touched or damaged, for example, during an exchange of components around the electric cable, and the straddled vehicle is improved in maintainability.

An MT straddled vehicle according to another aspect of the present teaching may be configured as follows.

The MT straddled vehicle (12) is the MT straddled vehicle of any one of (1) to (11), wherein the starter motor includes:
a stator including a stator core and windings of plural phases, the stator core having plural teeth circumferentially arranged such that the plural teeth and slots locate alternately, the windings being wound around the plural teeth; and
a rotor including a permanent magnetic section that has the magnetic pole parts being arranged circumferentially so as to oppose the stator via a gap, a number of magnetic pole parts being greater than 2/3 the number of the slots.

In the MT straddled vehicle (12), the number of magnetic pole parts is larger than 2/3 the number of the slots. Therefore, when the starter motor works as an electric generator, a rise in the temperature of the stator wires during high-speed rotation is suppressed. Accordingly, in the straddled vehicle (12), even if the canister is located near the engine, the canister is unlikely to be affected by the heat from the engine and the starter motor. Thus, the straddled vehicle (12) has more flexibility in arrangement of components in the region enclosed by the crankcase, the cylinder and the air-intake system when viewed along the crankshaft axial direction. As a result, the straddled vehicle (12) can be made more compact. The ratio of the number of magnetic pole parts to the number of slots that satisfies the condition of "the number of magnetic pole parts being larger than 2/3 the number of the slots" is such as, but not limited to, 10:12, 8:9, 4:3, etc. The number of magnetic pole parts is desirably equal to or larger than 8/9 the number of the slots, and more desirably larger than 8/9 the number of the slots. The number of the magnetic pole parts is still more desirably equal to or larger than the number of the slots. The number of the magnetic pole parts is still more desirably 4/3 the number of the slots. Any upper limit is not particularly set to the ratio, but the upper limit of the ratio is, for example, 4/3.

An MT straddled vehicle according to another aspect of the present teaching may be configured as follows.

The MT straddled vehicle (13) is the MT straddled vehicle of (12), wherein:
the crankcase is configured in such a manner that the inside thereof is lubricated with oil; and
the rotor of the starter motor includes no fans or fins that create an airflow for cooling, and is located in contact with the oil.

The MT straddled vehicle (13) satisfies the condition that the ratio of the number of magnetic pole parts to the number of slots satisfies the condition that the number of magnetic pole parts is larger than 2/3 the number of the slots. Therefore, the temperature of the stator wires does not become or is unlikely to become higher than the temperature of the oil. Accordingly, the starter motor can dissipate heat through the oil. Thus, in the MT straddled vehicle (13), an increase in the size of the mechanism for cooling the starter motor can be inhibited or prevented.

An MT straddled vehicle according to another aspect of the present teaching may be configured as follows.

The MT straddled vehicle (14) is the MT straddled vehicle of any one of (1) to (12), wherein the starter motor includes:
a cooling air inlet and a cooling air outlet; and
a rotor including a fan or a fin that creates an airflow, for cooling, from the cooling air inlet to the cooling air outlet.

The MT straddled vehicle (14) includes a forced-air-cooled starter motor. When the starter motor is a forced-air-cooled type, the cooling air outlet can be located away from components that require countermeasures against heat. Accordingly, in the MT straddled vehicle (14), the motor driver of the starter motor and the canister can be located away from the cooling air outlet of the starter motor.

An MT straddled vehicle according to another aspect of the present teaching may be configured as follows.

The MT straddled vehicle (15) is the MT straddled vehicle of any one of (1) to (14), wherein:
the starter motor is an outer-rotor-type motor; and
the rotor of the starter motor is shaped like a cylinder with a base, and is connected to the crankshaft at a place between the stator of the starter motor and the cylinder with respect to the crankshaft axial direction.

In the MT straddled vehicle (15), the location of the rotor of the starter motor is closer to the center with respect to the crankshaft direction than the location of the stator. Accordingly, in the MT straddled vehicle (15), the stator of the starter motor can be located on the crankcase cover of the engine. Therefore, the MT straddled vehicle (15) can dissipate heat from the starter motor easily.

An MT straddled vehicle according to another aspect of the present teaching may be configured as follows.

The MT straddled vehicle (16) is the MT straddled vehicle of any one of (1) to (15), wherein the starter motor assists engine output.

The MT straddled vehicle (16) suppresses a rise in the temperature of the starter motor, and by using the starter motor to assist engine output, it is possible to enhance the output.

An MT straddled vehicle according to another aspect of the present teaching may be configured as follows.

The MT straddled vehicle (17) is the MT straddled vehicle of any one of (12) to (16), wherein the starter motor includes a rotor position detector that is a pickup coil.

In the MT straddled vehicle (17), the starter motor includes a rotor position detector that is a pickup coil, and therefore, even when the temperature of the starter motor becomes high, the rotor position can be detected accurately.

An MT straddled vehicle according to another aspect of the present teaching may be configured as follows.

The MT straddled vehicle (18) is the MT straddled vehicle of any one of (1) to (17), wherein the engine is a single-cylinder engine, a multi-cylinder parallel engine or a multi-cylinder V engine.

In the MT straddled vehicle (18), regardless of the number of engine cylinders, the canister can be located in the region enclosed by the crankcase, the cylinder and the air-intake system when viewed along the crankshaft axial direction. Accordingly, the MT straddled vehicle (18) has more layout flexibility in arrangement of components in the region enclosed by the crankcase, the cylinder and the air-intake system when viewed along the crankshaft axial direction regardless of the number of engine cylinders.

The technical terms used herein are only to specify embodiments and are not to define the present teaching. The term "and/or" used herein includes every one of the associated items in a list and all possible combinations of the associated items. The terms "including", "comprising", or "having", and variations thereof used herein specify the presence of stated features, steps, operations, elements, components, and/or equivalents thereof, and can include one or more of steps, operations, elements, components, and/or their groups. The terms "provided to", "connected to", "coupled to" and equivalents thereof are used in a broad sense, and these terms encompass all cases in which something is provided, connected or coupled to something else whether directly or indirectly. Further, the terms "connected to" and "coupled to" can be used not only in relation to physical or mechanical connection or coupling but also in relation to direct or indirect electrical connection or coupling. Unless otherwise defined, all terms (including technical and scientific terms) used herein have the same meanings as commonly understood by one of ordinary skill in the art to which the present teaching pertains. It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein. It should be understood that the description of the present teaching discloses a number of techniques and steps. Each of these has individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the present description, a new MT straddled vehicle will be described. In the following paragraphs, for a complete understanding of the present teaching, details of various embodiments will be provided. However, it is clear that one of ordinary skill in the art can carry out the present teaching without having these details. The present disclosure should be understood as merely an example of the present teaching, and the present teaching should not be limited to the embodiments described below and/or shown by the drawings.

The MT straddled vehicle is a straddled vehicle with a manual multistage transmission. The straddled vehicle is a type of vehicle having a seat to be straddled and sat on by a driver. The straddled vehicle is, for example, a motorcycle of a moped type, an off-road type or an on-road type. The straddled vehicle is not necessarily a motorcycle and may be, for example, a motor tricycle, an ATV (all-terrain vehicle), or the like. The motor tricycle may have two front wheels and one rear wheel, or may have one front wheel and two rear wheels. The drive wheel of the straddled vehicle may be the rear wheel(s) or front wheel(s). Both the rear and front wheels may be drive wheels of the straddled vehicle. Preferably, the straddled vehicle is configured to be able to turn in a leaning posture. The straddled vehicle that is configured to be able to turn in a leaning posture is a straddled vehicle that is configured to turn in an inward leaning posture. Accordingly, the straddled vehicle that is configured to be able to turn in a leaning posture counteracts the centrifugal force applied to the straddled vehicle while the straddled vehicle is turning. The straddled vehicle that is configured to be able to turn in a leaning posture is expected to be frisky, and it is important that the straddled vehicle is highly responsive to a start operation. In the straddled vehicle that is configured to be able to turn in a leaning posture, for example, no torque converter that uses the dynamic action of a fluid is located on the power transmission route from a power source to a drive wheel.

The frame forms the skeleton of the straddled vehicle. The frame supports components installed in the straddled vehicle, for example, an engine, an electric generation unit, a drive unit, a battery, a fuel tank, etc. The frame includes at least a main frame. The frame includes, for example, a head pipe, and a main frame fixed to the head pipe. The frame may include other components in addition to the head pipe and the main frame, or alternatively, the frame may include components other than a head pipe and a main frame. The main frame may be composed of a single pipe or a combination of a plurality of pipes. The main frame may include a structural object other than pipes, such as a board. The frame may be such as, but not limited to, a single-cradle type, a double-cradle type, diamond type, a monocoque type, etc. The frame is subjected to a load from the front wheel and the rear wheel.

The engine, for example, includes single-cylinder engines and multi-cylinder engines with two or more cylinders. The action of the engine is to output the power that the engine generated through gas combustion as a torque and a rotation speed of the crankshaft. The engine is, for example, a four-stroke engine that has a high-load region and a low-load region during four strokes. The four-stroke engine that has a high-load region and a low-load region during four strokes is, for example, a single-cylinder engine, a two-cylinder engine, an unequal-interval combustion three-cylinder engine, or an unequal-interval combustion four-cylinder engine. The multi-cylinder engines, such as a single-cylinder engine, a two-cylinder engine, an unequal-interval combustion three-cylinder engine, an unequal-interval combustion four-cylinder engine, etc., are, for example, parallel or V four-stroke engines. Such four-stroke engines that have a high-load region and a low-load region during four strokes have low rotational stability during low-speed engine rotation as compared with other types of engines. However, the engine may be, for example, a four-stroke engine that has neither high-load nor low-load regions during four strokes. The high-load region is a region, during one cycle of engine combustion, in which the load torque is higher than the average load torque during one cycle of engine combustion. The low-load region is a region other than the high-load region during one cycle of engine combustion. From the viewpoint of the rotation angle of the crankshaft, the low-load region of the engine is wider than the high-load region of the engine. A compression step overlaps the high-load region.

The engine includes a cylinder and a crankcase. The cylinder includes a cylinder body and a cylinder head. The components contained in the cylinder head, the cylinder body and the crankcase form the engine. The crankcase is a part encasing a crankshaft. Not only does the crankcase encase the crankshaft and the multistage transmission, but the crankcase may encase other components. For example, the crankcase may encase a clutch. The crankcase may encase a pump. The crankcase may encase a fan.

The air-intake system is a system that supplies air to the engine. Fuel may be or may not be mixed with the air supplied to the engine. The air-intake system is, for example, any one of or a combination of some components, such as an air cleaner, a carburetor, an air element, a lead valve, etc.

The phrase "the cylinder is in an upright posture" means that the cylinder is set in such a manner as to oppose upward when the MT straddled vehicle is upright. When the engine includes a plurality of cylinders, only at least one of the cylinders should be in an upright posture. When it is necessary to use the position of an element inside the engine as a reference, the position of the cylinder in an upright posture can be used as a reference. The statement referring to the cylinder facing upward means that the cylinder extends upward, with respect to the upward-downward direction of the MT straddled vehicle, from the rotation axis of the engine and that the inclination angle of the central axis of the cylinder bore from a vertical line is within a specified angle. The specified angle may be, for example, 45 degrees or 30 degrees. The inclination angle is determined in a plane including both the central axis and the vertical line.

The region enclosed by the crankcase, the cylinder and the air-intake system when viewed along the crankshaft axial direction (the region hereinafter being referred to also as enclosed region) is a region enclosed by the contour lines of these components when viewed along the crankshaft axial direction. Specifically, the enclosed region is, for example, a region enclosed by the upper contour line of the crankcase, the rear contour line of the cylinder and the lower contour line of the air-intake system. When the contour lines of these components form a completely enclosed region, the region is the enclosed region. When a plurality of completely enclosed regions are formed, each of the regions is the enclosed region. When the contour lines of these components do not form a completely enclosed region, which means that the contour lines of these components form a region with an open part, the enclosed region can be defined as a region made by connecting both ends of the open part by a line segment. The air-intake system and the cylinder are connected to each other, and the cylinder and the crankcase are connected to each other. Accordingly, for example, an open part may exist between the air-intake system and the crankcase. In this case, one end of the open part is on the contour line of the air-intake system, and the other end of the open part is on the contour line of the crankcase. By connecting these ends of the open part by a line segment, the enclosed region can be defined. In this case, for example, both ends of the open part is determined in such a manner that the enclosed region becomes the largest.

The starter motor is, for example, a brushless motor. The brushless motor is a motor without a commutator. The brushless motor may be, for example, an outer rotor type or an inner rotor type. The brushless motor is not necessarily a radial gap type and may be an axial gap type. The starter motor functions as a starter motor that starts the engine. The starter motor additionally functions as a generator that generates electricity when driven by the engine or the drive wheel. Moreover, the starter motor may be a motor that assists the engine output.

The statement referring to the starter motor being located at one end of the crankshaft means, for example, that the starter motor is directly connected to the crankshaft. However, the starter motor is not limited to this, and the starter motor may have a shaft fixed to the crankshaft.

The starter motor is cooled with oil. In this case, the starter motor includes a rotor without any fans or fins that create an airflow for cooling, and the starter motor is located in contact with the oil. The starter motor may be cooled with air. In this case, the starter motor includes a cooling air inlet and a cooling air outlet, and the rotor of the starter motor includes a fan or a fin that creates an airflow, for cooling, from the cooling air inlet to the cooling air outlet.

The rotor position detector is a detector that detects the position of the rotor of the starter motor. As the rotor position detector, for example, a pickup coil is used. When the rotor position detector is located in the space for the starter motor, the rotor position detector is provided to the crankcase. The rotor position detector is provided to, for example, a starter motor cover of the crankcase. When the rotor position detector is located in the space for the starter motor, the rotor position detector may be provided to, for example, the stator of the starter motor.

The rotor position detector may be composed of, for example, a Hall IC. In this case, the rotor position detector detects the magnetic pole surfaces of the magnetic pole parts provided on the rotor of the starter motor. When the rotor position detector detects a magnetic pole surface, the electrical signal outputted therefrom changes. The electrical signal is sent from the rotor position detector to a control unit. The control unit determines the position of the rotor based on the change of the electrical signal outputted from the rotor position detector.

The motor driver has a switching function between electric power supply from the battery to the multiphase brushless motor and electric power supply from the multiphase brushless motor to the battery. The motor driver may be formed integrally with the control unit. The control unit is, for example, an ECU (engine control unit). The control unit may include a processor that performs a program, and the control unit may be an electronic circuit.

The canister is, for example, a container like a can filled with activated carbon that absorbs vapored fuel generated in the fuel tank.

The multistage transmission is configured to change the gear ratio in multiple steps in accordance with operation of, for example, a shift pedal. The multistage transmission is a manual multistage transmission. Any non-stage transmission shall not be deemed as the multistage transmission.

### Effect of Invention

The MT straddled vehicle according to the present teaching has more flexibility in arrangement of the canister and some other components in the region that is enclosed by the crankcase, the cylinder and the air-intake system when viewed along the crankshaft axial direction.

### Brief Description of Drawings

[FIG. 1] FIG. 1 is a diagram showing an MT straddled vehicle according to an embodiment of the present teaching.
[FIG. 2] FIG. 2 is a left side view of the straddled vehicle shown in FIG. 1.
[FIG. 3] FIG. 3 is an enlarged left side view of an engine unit of the straddled vehicle shown in FIG. 1.
[FIG. 4] FIG. 4 is an enlarged sectional view of the engine unit of the straddled vehicle shown in FIG. 1.
[FIG. 5] FIG. 5 is a chart schematically showing the relationship between crank angler position and necessary torque of the engine of the straddled vehicle shown in FIG. 1.
[FIG. 6] FIG. 6 is a sectional view of a brushless motor of the straddled vehicle shown in FIG. 1 along a line perpendicular to the rotation axis of the brushless motor.
[FIG. 7] FIG. 7 is an enlarged left side view of an engine unit of a straddled vehicle, which is a comparative example with the straddled vehicle shown in FIG. 1, having a starter motor used only as a starter.
[FIG. 8] FIG. 8 is a diagram showing an example of the enclosed region X shown in FIG. 3.
[FIG. 9] FIG. 9 is a block diagram schematically showing the electrical configuration of the engine unit of the straddled vehicle shown in FIG. 1.
[FIG. 10] FIG. 10 is an enlarged left side view of a frame and the engine unit of the straddled vehicle shown in FIG. 1.

### Description of Embodiments

### [Overall Structure]

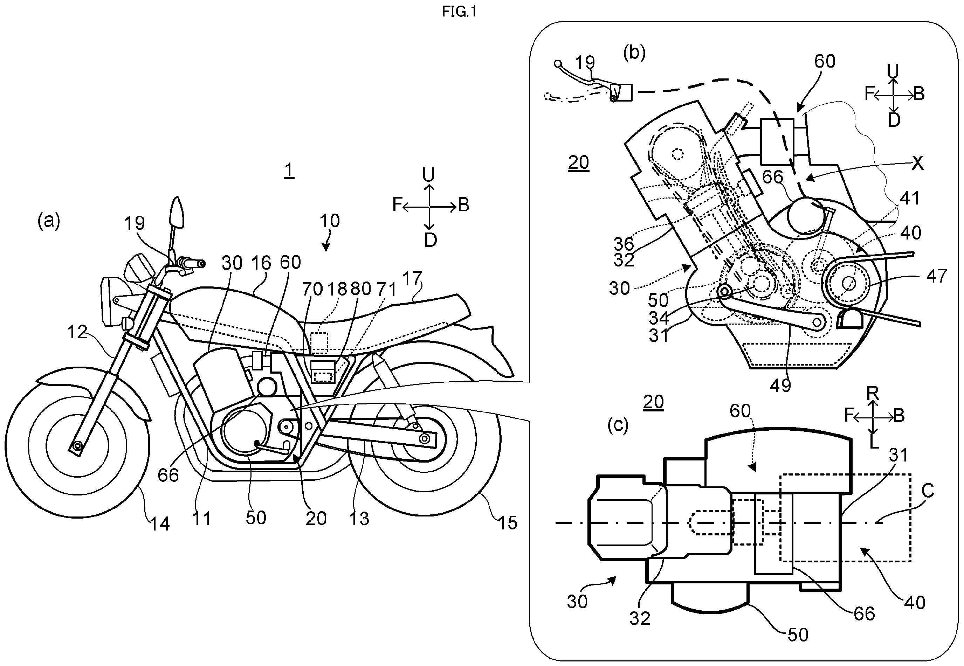

FIG. 1 is a diagram showing a straddled vehicle according to an embodiment of the present teaching.

In the present description and drawings, "F" indicates a forward direction of the straddled vehicle 1. "B" indicates a backward direction of the straddled vehicle 1. "FB" indicates the forward-backward direction of the straddled vehicle 1. "U" indicates an upward direction of the straddled vehicle 1. "D" indicates a downward direction of the straddled vehicle 1. "UD" indicates the upward-downward direction of the straddled vehicle 1. "L" indicates a leftward direction of the straddled vehicle 1. "R" indicates a rightward direction of the straddled vehicle 1. "LR" indicates the leftward-rightward direction of the straddled vehicle 1. "LR" also indicates the width direction of the straddled vehicle 1. Thus, the width direction LR includes the rightward direction R and the leftward direction L of the straddled vehicle 1. The definitions of these directions also apply to the directions of an engine unit 20 installed in the straddled vehicle 1.

The straddled vehicle 1 shown in FIG. 1 is an MT (manual transmission) straddled vehicle containing a manual multistage transmission. The straddled vehicle 1 includes a vehicle body 10 and an engine unit 20. The vehicle body 10 includes a frame 11, a front fork 12, a rear arm 13, a front wheel 14, and a rear wheel 15. Part (a) of FIG. 1 is a left side view of the straddled vehicle 1, and part (b) of FIG. 1 is an enlarged left side view of the engine unit 20 of the straddled vehicle 1. Part (c) of FIG. 1 is an enlarged top view of the engine unit 20 of the straddled vehicle 1.

The frame 11 forms the skeleton of the straddled vehicle 1. The front fork 12 is provided to the frame 11 in such a manner as to be rotatable and supports the front wheel 14 in such a manner that the front wheel 14 is rotatable. The rear arm 13 is provided to the frame 11 in such a manner as to be swingable and supports the rear wheel 15 in such a manner that the rear wheel is rotatable.

As shown in Part (a) of FIG. 1, the straddled vehicle 1 includes a fuel tank 16. In the fuel tank 16, fuel to be supplied to an engine 30 (which will be described later) is stored. The fuel tank 16 supplies the fuel to the engine 30. The fuel tank 16 is provided to the frame 11. The straddled vehicle 1 includes a seat 17. The seat 17 is provided to the frame 11. The fuel tank 16 is located more frontward F than the seat 17 with respect to the forward-backward direction FB of the straddled vehicle 1.

The straddled vehicle 1 includes a battery 18.

As shown in Part (b) of FIG. 1, the engine unit 20 includes a manual transmission 40, a brushless motor (starter generator) 50, an air-intake system 60 and a canister 66 in addition to the engine 30. Thus, the straddled vehicle 1 includes an engine 30, a manual transmission 40, a brushless motor 50, an air-intake system 60, and a canister 66.

The engine 30 includes a cylinder 32, a piston 36, a crankcase 31, and a crankshaft 34. The cylinder 32 has a cylinder bore in which the piston 36 is located in such a manner as to be capable of reciprocating motion. The crankcase 31 encases the crankshaft 34 and the manual transmission 40. The crankcase 31 is connected to the cylinder 32. The engine 30 is provided to the frame 11 in such a manner that the cylinder 32 is in an upright posture. The engine 30 outputs power generated by combustion through forward rotation of the crankshaft 34.

The manual transmission 40 is a manual multistage transmission. The manual transmission 40 is located on a power transmission route between the engine 30 and the rear wheel 15. The manual transmission 40 changes the gear ratio in multiple steps in accordance with the driver's operation of the straddled vehicle 1. The driver of the straddled vehicle 1 changes the manual transmission gear ratio by operating a shift pedal 49. Thus, the manual transmission 40 changes the rotation speed of the engine 30 in accordance with the operation of the driver of the straddled vehicle 1 and transmits the rotation speed of the engine to the rear wheel 15, which is a drive wheel. The multi-speed transmission 40 is switchable among a neutral state and a plurality of non-neutral states.

The manual transmission 40 includes a manual clutch 41 and an output part 47. The manual clutch 41 is located on the power transmission route, between the engine 30 and the manual transmission 40. The driver of the straddled vehicle 1 operates a manual clutch lever 19, and in accordance with the operation of the manual clutch lever 19, the manual clutch 41 is actuated. The driver of the straddled vehicle 1 interrupts and allows power transmission between the engine 30 and the manual transmission 40 via the manual clutch 41.

The brushless motor 50 is a permanent-magnet-type motor. The brushless motor 50 is located at an end of the crankshaft 34. The brushless motor 50 drives the crankshaft 34 at the time of starting the engine 30, and accordingly, the brushless motor 50 works as a starter motor that starts the engine 30. The brushless motor 50 is configured to work with the crankshaft 34. The brushless motor 50 drives the crankshaft 34 when supplied with electricity from a battery 18. Additionally, the brushless motor 50 is driven by the engine 30 at the time of combustion in the engine 30, and the brushless motor 50 works as a generator that generates electricity. The brushless motor 50, which works as a starter motor and a generator, is contained in the engine unit 20. This will omit, for example, a starter motor functioning only as a starter different from a generator.

The intake air system 60 allows intake air supplied to the engine 30 pass through. The intake air system 60 is a general term for parts protruding from the cylinder 32 of the engine 30. Fuel is vaporized in the fuel tank 16, and the vaporized fuel is temporarily stored in the canister 66 and is supplied to the engine 30. The canister 66 is located in such a manner that at least part of the canister 66 is in an enclosed region X enclosed by the crankcase 31, the cylinder 32 and the intake air system 60 when viewed along the crankshaft axial direction as shown in Part (b) of FIG. 1 and said part of the canister 66 is on a centerline C when the MT straddled vehicle 1 is viewed downward from above D as shown in Part (c) of FIG. 1. The centerline C is a line that passes through the center of the MT straddled vehicle 1 with respect to the vehicle width direction LR and extends in the forward-backward direction FB. The vehicle width direction LR is also referred to as crankshaft axial direction.

The straddled vehicle 1 includes a motor driver 70 and a control unit 80. The motor driver 70 includes an inverter 71. The inverter 71 controls the current flowing between the battery 18 and the brushless motor 50. The motor driver 70 is controlled by the control unit 80. The control unit 80 controls the combustion in the engine 30 and thereby controls the rotation power outputted from the engine 30. Additionally, the control unit 80 controls the inverter 71 and thereby controls the brushless motor 50.

### [Details of Parts]

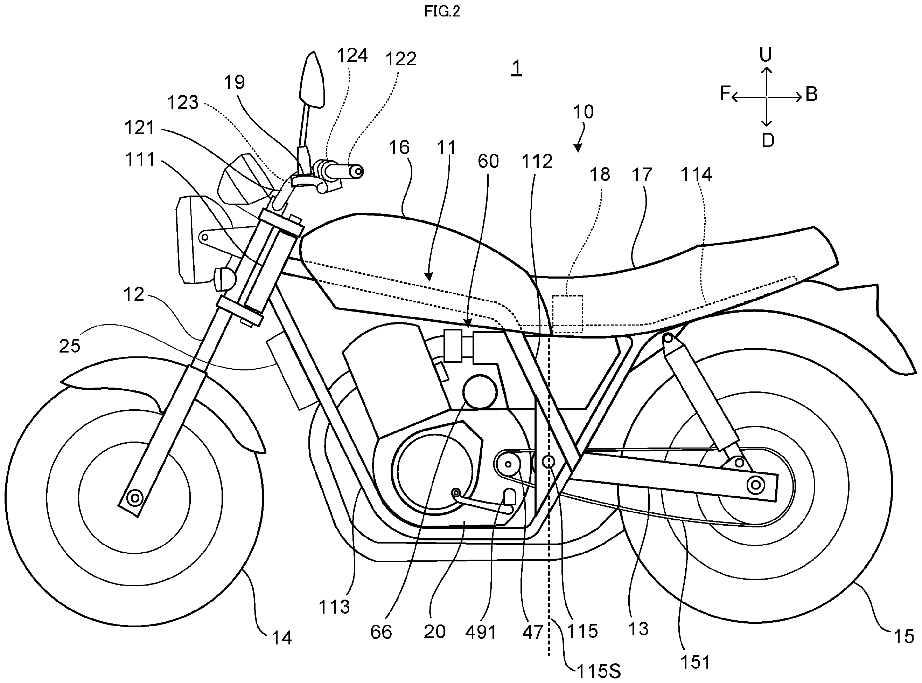

The straddled vehicle 1 according to the embodiment of the present teaching will hereinafter be described in detail. FIG. 2 is a left side view of the straddled vehicle shown in FIG. 1. The straddled vehicle 1 is more specifically an MT straddled vehicle. The straddled vehicle 1 is also a motorcycle. More specifically, the straddled vehicle 1 is an MT motorcycle. More specifically, the straddled vehicle 1 includes a vehicle body 10 and an engine unit 20. The vehicle body 10 includes a frame 11, a front fork 12, a rear arm 13, a front wheel 14, a rear wheel 15, a fuel tank 16, and a seat 17.

The frame 11 includes a head pipe 111, a main frame 112, a downtube 113, a seat rail 114, and a pivot 115.

The had pipe 111 supports the front fork 12 in such a manner that the front fork 12 is rotatable. The front fork 12 supports the front wheel 14 in such a manner that the front wheel 14 is rotatable. A handlebar 121 is fixed to the upper end of the front fork 12 with respect to the upward-downward direction UD of the straddled vehicle 1. The handlebar 121 functions as a steering handle. A manual clutch lever 19 is provided to the left part of the handlebar 121 with respect to the leftward-rightward direction LR of the straddled vehicle 1. An acceleration operator 122, a brake lever 123 and an engine start switch 124 are provided to the right part of the handlebar 121.

The main frame 112 extends from the head pipe 111 backward B along the frontward-backward direction FB of the straddled vehicle 1. The main frame 112 is a main part of the frame 11 and supports the engine unit 20 together with the downtube 113. The main frame 112 also supports the fuel tank 16. The downtube 113 extends from the head pipe 111 backward B and downward D with respect to the forward-backward direction FB and the upward-downward direction UD of the straddled vehicle 1. The rear end of the main frame 112 and the rear end of the downtube 113 with respect to the forward-backward direction FB of the straddled vehicle 1 are joined together.

The seat rail 114 is located at the rear of the main frame 112 and extends from the rear portion of the main frame 112 backward B with respect to the forward-backward direction FB of the straddled vehicle 1. The seat 17 is provided to the seat rail 114. The seat 17 is a saddle type. The fuel tank 16 and the seat 17 form a part of the upper contour line of the vehicle body 10 when the straddled vehicle 1 is viewed along a leftward (L) or rightward (R) position.

The pivot 115 is located at the joint part between the main frame 112 and the down tube 113. The pivot 115 supports the rear arm 13 in such a manner that the rear arm 13 is swingable. The rear arm 13 supports the rear wheel 15 in such a manner that the rear wheel 15 is rotatable. The rear wheel 15 is a drive wheel that is supplied with power outputted from the engine unit 20 and drives the straddled vehicle 1.

The engine unit 20 outputs power from the output part 47 toward the rear wheel 15. The output part 47 is a sprocket wound with a chain 151. The output part 47 is located outside the casing of the engine unit 20. The output part 47 is actually covered with a cover (not shown) for the vehicle body 10; however, in FIG. 2, the output part 47 is depicted by solid line to make it understandable more easily that the output part 47 is outside the casing. The power of the engine unit 20 is transmitted to the rear wheel 15 via the sprocket and chain 151 serving as the output part 47. Footrests 491 are provided to the casing of the engine unit 20. The driver of the straddled vehicle 1 straddles and sits on the seat 17, and the driver puts his or her feet on the footrests 491 while driving the straddled vehicle 1. The battery 18 is located inside the vehicle body 10. The battery 18 stores electric power.

### [Engine Unit]

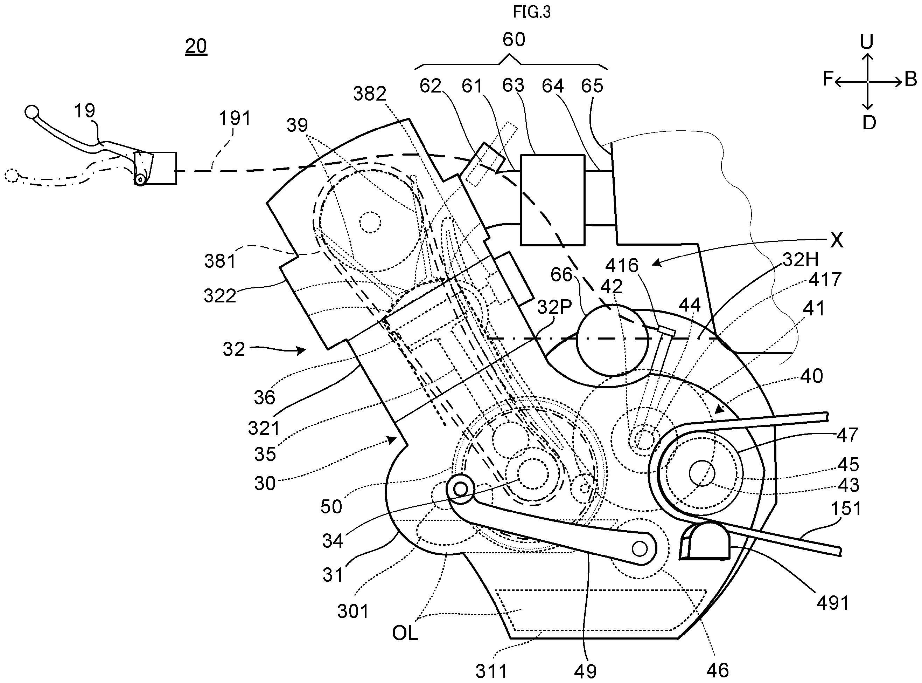

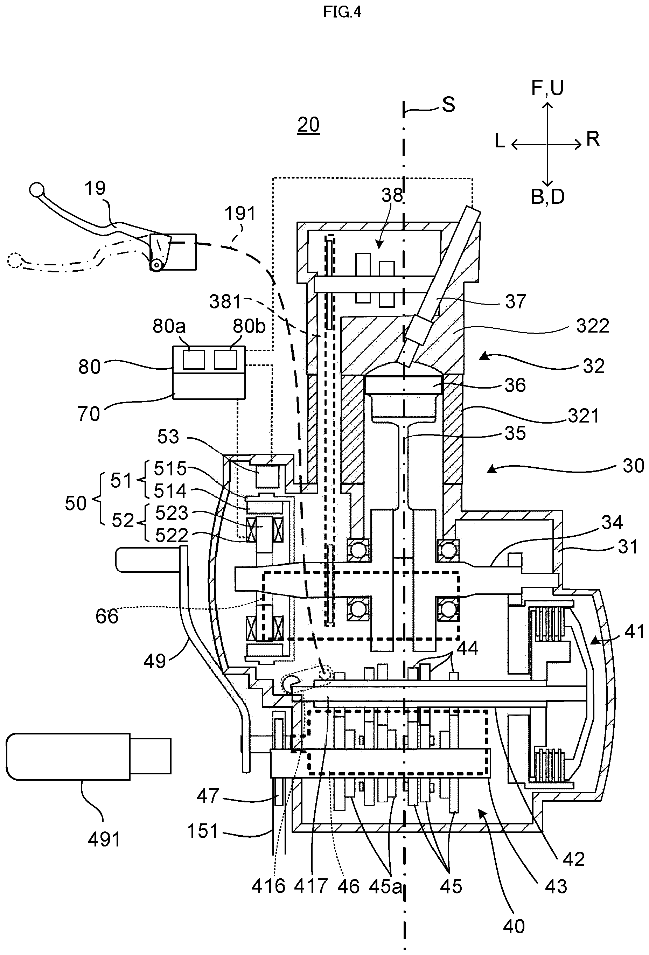

FIG. 3 is an enlarged left side view of the engine unit 20 shown in FIG. 1. FIG. 4 is an enlarged sectional view of the engine unit 20 shown in FIG. 1. The engine unit 20 includes an engine 30, a manual transmission 40, a brushless motor 50, an air-intake system 60, and a canister 66. The engine unit 20 additionally includes a radiator 25 (see FIG. 2). Accordingly, the engine 30 is a water-cooled engine.

The engine 30 further includes a crankcase 31 and a cylinder 32. The engine 30 furthermore includes a crankshaft 34, a connecting rod 35, a piston 36, an ignition plug 37 (see FIG. 4), a valve operation mechanism 38 (see FIG. 4), and a valve 39.

The crankcase 31 and the cylinder 32 form the casing of the engine unit 20. The cylinder 32 includes a cylinder body 321 and a cylinder head 322. The piston 36 is located in the cylinder body 321 in such a manner as to be capable of reciprocating motion therein. The crankcase 31 is connected to the cylinder body 321.

The crankshaft 34 is located in the crankcase 31 and supported by the crankcase 31 in such a manner to be rotatable. The piston 36 and the crankshaft 34 are connected to each other via the connecting rod 35. The valve 39 and the valve operation mechanism 38 are located in the cylinder head 322.

The crankshaft 34, the manual transmission 40 and the brushless motor 50 are located in the crankcase 31. The power of the crankshaft 34 is transmitted to the valve operation mechanism 38 via a cam chain 381. The valve operation mechanism 38 operates the valve 39 to work in synchronization with the rotation of the crankshaft 34 and the reciprocal motion of the piston 36. The slack of the cam chain 381 is adjusted by a chain tensioner 382.

The engine 30 includes a balancer 301. The balancer 301 is located more frontward than the vertical line passing through the crankshaft axis when viewed from a leftward (L) or rightward (R) position.

The crankcase 31 is configured in such a manner that the inside thereof is lubricated with low-viscosity oil OL. In other words, the engine 30 contains low-viscosity oil OL. The crankshaft 34, the manual transmission 40 and the brushless motor 50 are lubricated with the same low-viscosity oil OL. The low-viscosity oil OL lubricates and cools each part of the engine unit 20.

The low-viscosity oil OL is pumped by an oil pump (not shown) to circulate in the engine 30. More specifically, the low-viscosity oil OL pools in an oil pan 311 located below the crankcase 31. The low-viscosity oil OL in the oil pan 311 is pumped by the oil pump (not shown). The pumped low-viscosity oil OL is supplied to the piston 36 and the crankshaft 34 through an oil supply channel (not shown). The oil supply channel is formed of, for example, a hole formed inside the crankshaft 34, a hole formed inside the cylinder body 321, and a groove formed on the joint surface between the cylinder body 321 and the cylinder head 322.

The low-viscosity oil OL is additionally supplied to the manual transmission 40 and the brushless motor 50. More specifically, the low-viscosity oil OL supplied to the piston 36 flows to the brushless motor 50 that is located more downward D than the piston 36 with respect to the upward-downward direction UD. The low-viscosity oil OL is pooled in such a manner that the brushless motor 50 is partly soaked in the low-viscosity oil OL. For example, the low-viscosity oil OL is pooled by being dammed by a wall (not shown) formed around a part of the brushless motor 50, and thereby, the brushless motor 50 is partly soaked in the low-viscosity oil OL. For example, the low-viscosity oil OL overflows the damming wall into the oil pan 311. When the brushless motor 50 rotates, the low-viscosity oil OL adhering to the brushless motor 50 diffuses inside the crankcase 31.

Moreover, the low-viscosity oil OL is partly supplied to the valve operation mechanism 38 via the cam chain 381. In this way, the inside of the engine 30 is lubricated with the low-viscosity oil OL. Accordingly, the inside of the crankcase 31 is lubricated with the low-viscosity oil OL.

The low-viscosity oil OL is a lubricating oil that has a low-temperature viscosity grade lower than 20W according to SAE viscosity classification specified by SAE J300. The lower the value of viscosity grade is, the lower the viscosity of the oil is. The high-temperature viscosity grade of the lubricating oil according to SAE viscosity classification specified by SAE J300 is not particularly limited. The SAE viscosity grade of a lubricating oil is defined by XW-Y, in which X is an integer equal to or more than 0 and less than 20, and Y is an integer equal to or more than 0. The lubricating oil contains a base oil and additives. Generally, when the viscosity of the lubricating oil is lower, the evaporation temperature of the lubricating oil is lower, and the lubricating oil evaporates more easily. Lubricating oils with the same viscosity differ in evaporation temperature in some cases depending on what kind the base oil is (for example, whether the base oil is a mineral oil or a synthetic oil) and what kind of additives are contained. The evaporation characteristic of the lubricating oil can be measured, for example, by a boiling point distribution measuring method employing gas chromatography simulated evaporation according to ASTM D6352.

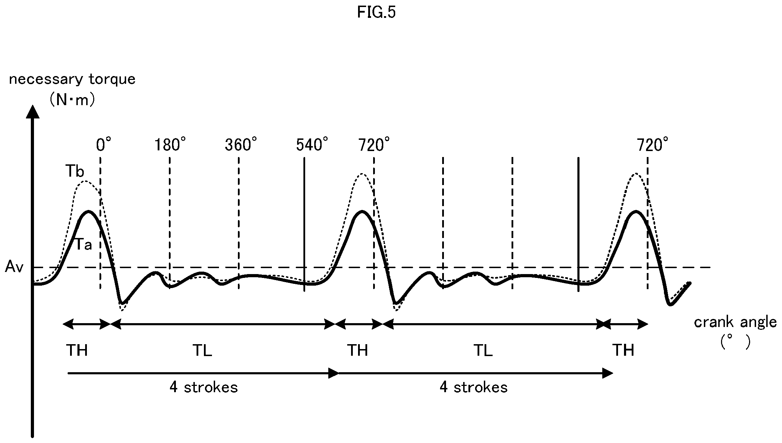

FIG. 5 is a chart showing the relationship between crank angler position and necessary torque of the engine 30. The solid line Ta in FIG. 5 shows the torque required to rotate the crankshaft 34 while the engine 30 is not operating for combustion. The engine 30 is a single-cylinder engine. The engine 30 has a high-load region TH, in which the load for rotation of the crankshaft 34 is high, and a low-load region TL, in which the load for rotation of the crankshaft 34 is lower than the load in the high-load region TH.

The high-load region is the part of one combustion cycle in which the load torque is higher than the average Av of the load torque in the combustion cycle. In relation to the rotation angle of the crankshaft 34, the low-load region TL is equal to or wider than the high-load region TH. More specifically, the lower-load region TL is wider than the high-load region TH. In other words, the range of rotation angle corresponding to the low-load region TL is wider than the range of rotation angle corresponding to the high-load region TH. The engine 30 rotates while repeating intake, compression, expansion (combustion), and exhaust. The compression step overlaps the high-load region TH. The low-load region TL is between combustion steps.

One combustion cycle of the engine 30 includes an intake step, a compression step, an expansion step and an exhaust step. The engine 30 rotates while repeating intake, compression, expansion, and exhaust. At the intake step, a mixed gas of fuel and air is supplied into a combustion chamber defined by the cylinder body 321, the cylinder head 322 and the piston 36 as shown in FIG. 3 and 4. At the compression step, the piston 36 compresses the mixed gas in the combustion chamber. At the expansion step, the mixed gas ignited by the ignition plug 37 combusts and presses the piston 36. At the exhaust step, the gas after the combustion is exhausted from the combustion chamber as an exhaust gas. The reciprocal motion of the piston 36 is converted into rotation of the crankshaft 34. The energy generated by the fuel combustion in the engine 30 is transmitted to the manual transmission 40 as output power of the crankshaft 34.

The engine 30 shown in FIG. 4 is a single-cylinder engine. However, as a modification, the engine 30 may be a multi-cylinder parallel engine or a multi-cylinder V engine.

### [Manual Multistage Transmission]

The manual transmission 40 changes the rotation speed of the crankshaft 34 in accordance with the gear position. The manual transmission 40 is a multistage transmission that is switchable among a plurality of gear positions. The manual transmission 40 includes a manual clutch 41, an input shaft 42, an output shaft 43, drive gears 44, driven gears 45, dog rings 45a, a gear setting mechanism 46, and an output part 47. The manual transmission 40 changes the rotation speed of the crankshaft 34 at a gear ratio in accordance with the operation of the shift pedal 49, and thereafter outputs the rotation speed of the crankshaft 34. The driver operates the shift pedal 49 with his or her foot.

The manual clutch 41 shuts off the power transmission between the engine 30 and the rear wheel 15 (see FIG. 1) in accordance with the operation of the manual clutch lever 19. More specifically, the manual clutch 41 shuts off the power transmission between the crankshaft 34 and the input shaft 42. The manual clutch 41 shuts off the power transmission in accordance with the driver's operation of the manual clutch lever 19.

The manual clutch 41 is connected to the manual clutch lever 19 via a mechanical wire 191. Specifically, the manual clutch 41 is connected to the manual clutch lever 19 via the mechanical wire 191, a clutch arm 416 and a lifter rod 417. When the manual clutch lever 41 is operated, the mechanical wire 191, the clutch arm 416 and the lifter rod 417 are displaced. Then, the power transmission is shut off.

A plurality of drive gears 44 are provided to the input shaft 42 in such a manner as to inevitably rotate together with the input shaft 42. Each of the plurality of drive gears 44 corresponds to a gear position. A plurality of driven gears 45 are provided to the output shaft 43 in such a manner as to be rotatable relative to the output shaft 43. The dog rings 45a are provided to the output shaft 43 in such a manner as to rotate together with the output shaft 43. The plurality of driven gears 45 are configured to come into engagement with the corresponding drive gears 44. Usually, at least one of the driven gears 45 is in engagement with the corresponding drive gear 44. The output shaft 43 moves with the output part 47 of the engine unit 20. More specifically, the output shaft 43 is fixed to the output part 47. The power transmitted to the output shaft 43 is outputted through the output part 47.

The gear setting mechanism 46 is configured to set the engagement of the drive and driven gears 44 and 45 mechanically and selectively to achieve a gear position for effective power transmission from the input shaft 42 to the output shaft 43. The gear setting mechanism 46 includes a shift cam (not shown) and a shift fork. When the shift cam is rotated by the driver's operation of the shift pedal 49, the shift fork is guided to a cam groove formed on the shift cam, and the shift fork moves at least one of the dog rings 45a in the axial direction. Each of the driven gears 45 and the dog rings 45a has a dog. For example, when at least one of the dog rings 45a is moved in the axial direction, the dog of the corresponding driven gear 45 comes into engagement with the dog of the dog ring 45a. Then, power transmission in accordance with any one of the gear positions becomes possible. In this way, the manual transmission 40 changes the gear ratio in accordance with the driver's operation of the shift pedal 49. The rotation speed of the crankshaft 34 is changed at a gear ratio in accordance with the driver's operation of the shift pedal 49 and is outputted through the output part 47.

By the driver moving the shift pedal 49 upward U or downward D with his or her left toe while resting his or her feet on the footrests 491, the shift pedal 49 turns around its rotation axis. In this way, the gear setting mechanism 46 sets the engagement of the drive and driven gears 44 and 45 to achieve a gear position for effective power transmission.

### [Permanent-Magnet-Type Starter Generator]

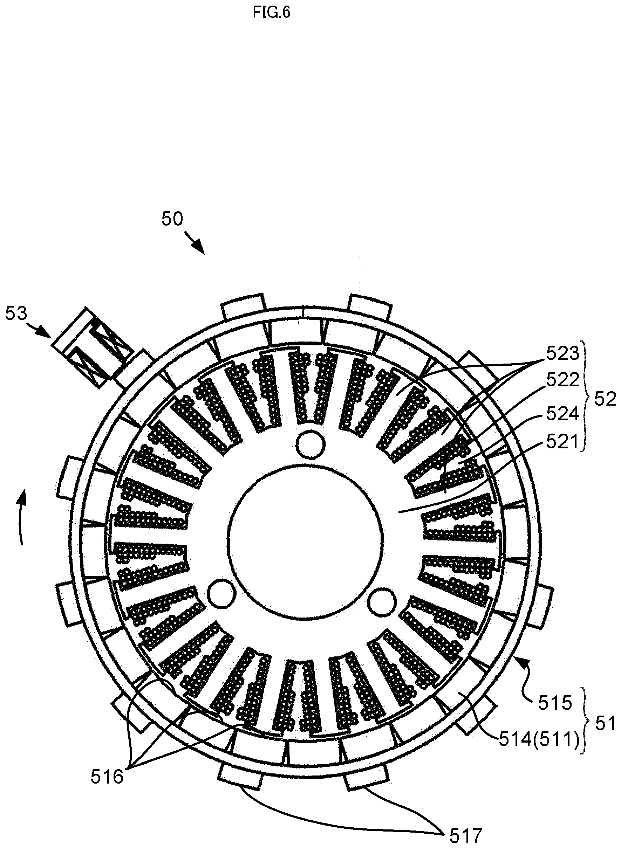

FIG. 6 is a sectional view of the brushless motor 50 shown in FIGS. 3 and 4, along the rotation axis of the brushless motor 50. With reference to FIGS. 3 to 6, the brushless motor 50 will be described. The brushless motor 50 is provided to the crankshaft 34. The brushless motor 50 is a permanent-magnet-type three-phase brushless motor. The brushless motor 50 functions as a permanent-magnet-type three-phase brushless generator.

The brushless motor 50 includes a rotor 51 and a stator 52. The brushless motor 50 is a radial gap type. The brushless motor 50 is an outer rotor type. Thus, the rotor 51 is an outer rotor. The stator 52 is an inner stator.

The rotor 51 includes a rotor body 515. The rotor body 515 is made of, for example, a ferromagnetic material. The rotor 51 is shaped like a cylinder with a base, and is connected to the crankshaft 34 at a place between the stator 52 and the cylinder of the engine 32 with respect to the axial direction of the crankshaft 34. The rotor body 515 is fixed to the crankshaft 34. The rotor 51 is not wound with any wires carrying current. The rotor 51 does not include any fans or fins that create an airflow for cooling. The rotor 51 is located in contact with the low-viscosity oil OL.

The rotor 51 includes a permanent magnetic section 511. The permanent magnetic section 511 is located to oppose the stator 52 with a space therebetween. The rotor 51 has a plurality of magnetic pole parts 514. The magnetic pole parts 514 are formed by the permanent magnetic section 511. The plurality of magnetic pole parts 514 are located on the inner circumference of the rotor body 515. The permanent magnetic section 511 is formed of a plurality of permanent magnets. However, the permanent magnetic section 511 may be formed of one permanent magnet that is magnetized to have a plurality of pairs of magnetic poles.

The plurality of magnetic pole parts 514 are arranged in such a manner that N pole and S pole alternate in the circumferential direction of the brushless motor 50. In this embodiment, the number of the magnetic poles of the rotor 51 that are located to oppose the stator 52 is 24. The number of magnetic poles of the rotor 51 means the number of magnetic poles that are located to oppose the stator 52. There is no magnetic body between the magnetic pole parts 514 and the stator 52.

The magnetic pole parts 514 are located outward from the stator 52 in the radial direction of the brushless motor 50.

The stator 52 includes a stator core 521 and a plurality of stator wires 522. The stator core 521 has a plurality of teeth 523 that are arranged at intervals in the circumferential direction. The plurality of teeth 523, in one body, extend outward in the radial direction from the stator core 521. In this embodiment, a total of 18 teeth 523 are arranged at intervals in the circumferential direction. In other words, the stator core 521 has 18 slots 524 formed at intervals in the circumferential direction. The teeth 523 are arranged in the circumferential direction at regular intervals.

The number of the magnetic pole parts 514 of the rotor 51 is larger than the number of the teeth 523. In other words, the brushless motor 50 includes a larger number of magnetic pole pars 514 than the number of the teeth 523. The number of the magnetic pole parts is 4/3 the number of the slots.

Each of the teeth 523 is wound with a stator wire 522. Specifically, stator wires 522 in a plurality of phases are wound in such a manner as to pass through the slots 524. FIG. 6 shows a state in which the stator wires 522 are in the slots 524. Each of the stator wires 522 is in U phase, V phase or W phase. The stator wires 522 are arranged, for example, in such a manner that a wire of U phase, a wire of V phase and a wire of W phase are arranged in this order repeatedly.

The engine unit 20 includes a rotor position detector 53. The rotor position detector 53 is a device that detects the position of the rotor 51. The rotor position detector 53 is located in such a manner that detectable parts 517 come to a position to oppose the rotor position detector 53 as the rotor 51 is rotating. As the rotor position detector 53, a pickup coil is used. The rotor position detector 53 is fixed to a crankcase cover 221 and is located in the space for the brushless motor 50.

The rotor 51 is fixed to the crankshaft 34 not via any power transmission mechanisms (not via any belts, any chains, any gears, any speed reducers, any speed increasers, etc.). The rotor 51 rotates at a speed ratio of 1:1 to the crankshaft 34. More specifically, the rotor 51 is connected to the crankshaft 34 in such a manner as to rotate with the crankshaft 34 at the same speed. The rotation axis of the brushless motor 50 and the rotation axis of the crankshaft 34 are substantially the same. More specifically, the rotor 51 is fixed to the crankshaft 34. More specifically, the rotor 51 is connected to the crankshaft 34 directly. Accordingly, the rotor 51 rotates together with the crankshaft 34. The rotation axis of the brushless motor 50 is integrated with the crankshaft 34. The brushless motor 50 is supplied with electricity after the start of the engine and thereby drives the crankshaft 34. In this case, the brushless motor 50 also functions to assist the engine output of the straddled vehicle 1.

As a modification of the starter motor, the starter motor has a cooling air inlet and a cooling air outlet, and that may have a fan or a fin that creates an airflow from the cooling air inlet to the cooling air outlet to cool the rotor 51.

### [Positions of Air-intake system and Canister]

The air-intake system 60 includes air intake hoses 61 and 64, a fuel spray device 62, a throttle body 63, and an air cleaner 65 (see FIG. 3). The air intake hose 61 connects an intake port of the cylinder 32 of the engine 30 and the throttle body 63. The fuel spray device 62 is provided to the air intake hose 61 and supplies fuel to the air flowing into the engine 30. The throttle body 63 adjusts the volume of air flowing into the engine 30. The air cleaner 65 removes dust, dirt, etc. from the air flowing into the engine 30. The air intake hose 64 connects the throttle body 63 and the air cleaner 65.

The canister 66 is formed in a shape having a longitudinal direction and a lateral direction, such as a cylinder. The canister 66 is located in a region enclosed by the crankcase 31, the cylinder 32 and the air-intake system 60 (which will hereinafter be referred to as enclosed region X) when viewed from a leftward (L) or rightward (R) position (see FIG. 3). More specifically, the canister 66 is located in such a manner that at least part of the canister 66 is located in the enclosed region X with its longitudinal direction same as or substantially same as the leftward-rightward direction LR. The canister 66 is located more downward D than the seat 17. The canister 66 is located more frontward than the front contour line of the main frame 112 when viewed from a leftward (L) or rightward (R) position. Thus, in the present embodiment, the canister 66 is not located in such a manner as to be overlapped by the main frame 112 when viewed along a leftward (L) or rightward (R) position. Accordingly, the straddled vehicle 1 is prevented from bulging in the leftward-rightward direction LR.

When viewed from a leftward (L) or rightward (R) position, the canister 66 is located more downward D than the lower contour line of the part of the air-intake system 60 that is more frontward F, with respect to the forward-backward direction FB of the MT straddled vehicle 1, than a line 115S passing through the pivot 115 and extending in the upward-downward direction UD (see FIG. 2). Therefore, in the MT straddled vehicle 1 of the present embodiment, the air-intake system 60 is not overlapped by the canister 66 in the leftward-rightward direction LR in the places where the driver's legs are positioned when the driver rests his or her feet on the footsteps. Thus, the MT straddled vehicle 1 is inhibited from increasing in vehicle width, and the driver of the MT straddled vehicle 1 can settle his or her legs in comfortable positions.

The canister 66 is located in such a manner that when viewed from a leftward (L) or rightward (R) position, at least part of the canister 66 is more downward D than a line 32H passing through the rear end 32P, with respect to the forward-backward direction FB, of the boundary between the cylinder head 322 and the cylinder body 321 of the cylinder 32 and extending in the forward-backward direction FB. Accordingly, in the MT straddled vehicle 1, the canister 66 can be positioned on top of the crankcase 31. Thus, the MT straddled vehicle 1 of the present embodiment makes more efficient use of the space that has been used for the conventional starter motor.

The canister 66 is located in such a manner that when viewed downward from above D, at least part of the canister 66 is overlapped by the air cleaner 65. In the MT straddled vehicle 1 of the present embodiment, the canister 66 can be positioned in a space between the crankcase 31 and the air cleaner 65. Thus, the MT straddled vehicle 1 of the present embodiment makes still more efficient use of the space that has been used for the conventional starter motor.

The canister 66 is connected to the fuel tank 16 and connected to the air-intake system 60. More specifically, the canister 66 is connected to the fuel tank 16 via a vapor passage (not shown). The canister 66 is connected to the air intake hose 61 air-intake system 60 via a purge passage (not shown).

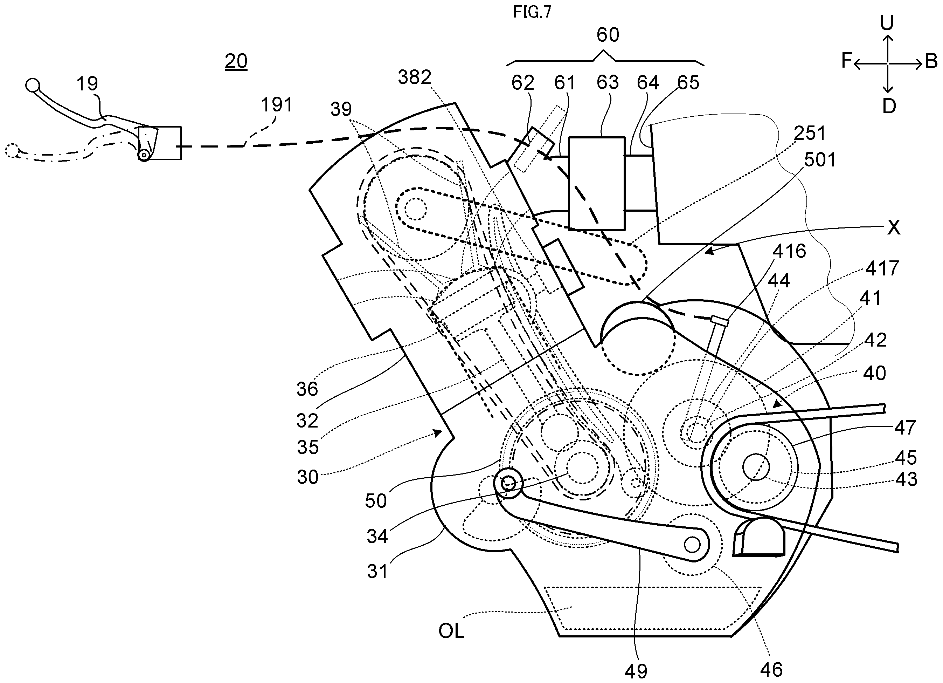

With reference to FIGS. 3 and 7, the enclosed region X will be described. FIG. 7 shows a comparative example with the present embodiment. FIG. 7 is an enlarged left side view of an engine unit of a straddled vehicle having a starter motor used only as a starter. As in the comparative example shown in FIG. 7, in the past, the starter motor 501 only used as a starter has been typically located in the enclosed region X, at the upper edge of the crankcase 31. In the straddled vehicle of the comparative example shown in FIG. 7, not only the starter motor 501 but also a clutch arm 416, a mechanical wire 191, a chain tensioner 382, etc. are located in the enclosed region X. When the engine 30 is a water-cooled engine, a radiator hose 251 is additionally located in the enclosed region X. Furthermore, a muffler and others are located in the enclosed region X in some cases. Therefore, in the straddled vehicle of the comparative example shown in FIG. 7, there is only a limited space for the canister.

In the straddled vehicle 1 of the present embodiment, the starter motor 501 can be eliminated from the enclosed region X. The elimination of the conventional starter motor 501 from the enclosed region X frees more space in the enclosed region X and provides more flexibility in arrangement of other components in the enclosed region X. Accordingly, in the straddled vehicle 1 of the present embodiment, the space that has been used for the conventional starter motor 501 only used as a starter can be used for the components associated with the operation of the engine 30, and these components can be arranged more flexibly. The components associated with the operation of the engine 30 are, for example, a radiator hose, a canister, a chain tensioner, a thermostat, a throttle valve, etc.

In the present embodiment, in the allowance space made by the elimination of the conventional starter motor 501 from the enclosed region X, the canister 66 is positioned as shown in FIG. 3. The shape of the canister 66 is similar to the shape of the conventional starter motor 501, and therefore, even when the canister 66 is located in the enlarged space in the enclosed region X, other components can be arranged still flexibly. In the space enlarged by the position of the canister 66 in the space that has been used for the conventional starter motor 501, a chain tensioner, a thermostat, a throttle valve and other components can be positioned flexibly. Thus, the straddled vehicle 1 of the present embodiment has a high degree of layout flexibility in arrangement of components in the enclosed region X.

The engine 30 includes a balancer 301 that is located more frontward than a vertical line passing through the crankshaft axis when viewed from a leftward (L) or rightward (R) position (see FIG. 3). When the balancer 301 is provided to the engine 30, the balancer 301 protrudes from the engine 30. In the straddled vehicle 1, the balancer 301 is more frontward, with respect to the forward-backward direction FB, than a vertical line passing through the crankshaft axis. Thus, the balancer 301 is positioned away from the enclosed region X. In this way, in the straddled vehicle 1, the space in the enclosed region X can be used more efficiently.

As shown by dashed line in FIG. 4, the canister 66 is located in a position shifted from the centerline S of the cylinder 32 toward the brushless motor 50 in the leftward-rightward direction LR. Generally, a conventional starter motor, which is not used as a generator, has been located in a position shifted from the centerline S of the cylinder toward a generator. The shape and/or size of a conventional starter motor is generally similar to a canister. Therefore, locating the canister 66 in a position shifted from the centerline S of the cylinder 32 toward the brushless motor 50 permits efficient use of the space that has been used for the conventional starter motor for the canister 66. Locating the canister 66 in a position shifted from the centerline S of the cylinder 32 toward the brushless motor 50 additionally permits the canister 66 to be kept away from a muffler (an air exhaust system).

The enclosed region X is, for example, a region enclosed by the upper contour line of the crankcase 31, the rear contour line of the cylinder 32 and the lower contour line of the air-intake system 60. When a completely enclosed region is created by the contour lines of these components, the region is the enclosed region. When two or more completely enclosed regions are created, each of these regions is the enclosed region.

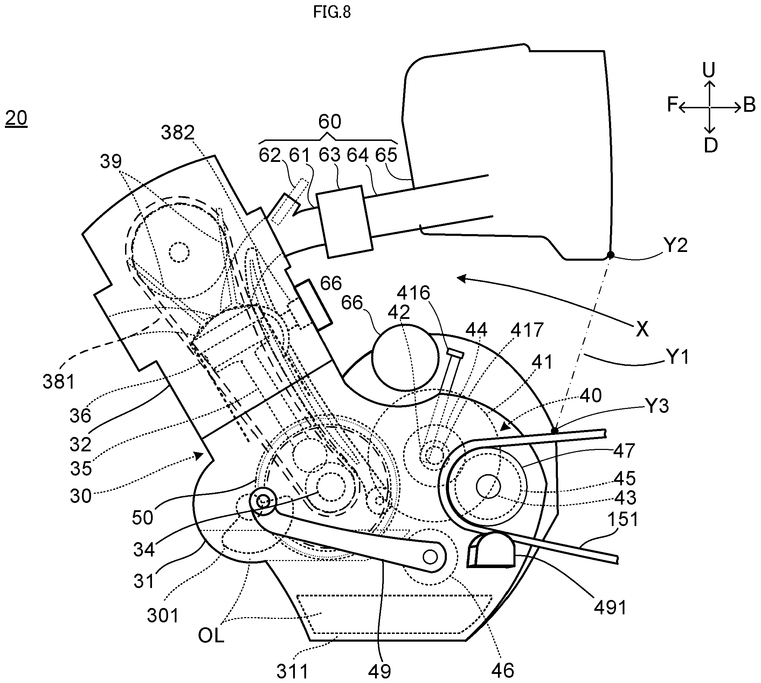

FIG. 8 shows an example of the enclosed region X shown in FIG. 3. As shown in FIG. 8, when no completely enclosed region X is created by the contour lines of the components, that is, when there is an open part, the enclosed region is defined by connecting both ends of the open part by a line segment Y1. The air-intake system 60 and the cylinder 32 are connected to each other, and the cylinder 32 and the crankcase 31 are connected to each other. Accordingly, there may create an open part, for example, between the air-intake system 60 and the crankcase 31. In this case, one end Y2 of the open part is on the contour line of the air-intake system 60, and the other end Y3 of the open part is on the contour line of the crankcase 31. By connecting the ends Y2 and Y3 of the open part by a line segment Y1, it is possible to define the enclosed region X. In this regard, both ends of the open part are settled, for example, in such a manner that the enclosed region X becomes the largest.

### [Control Unit]

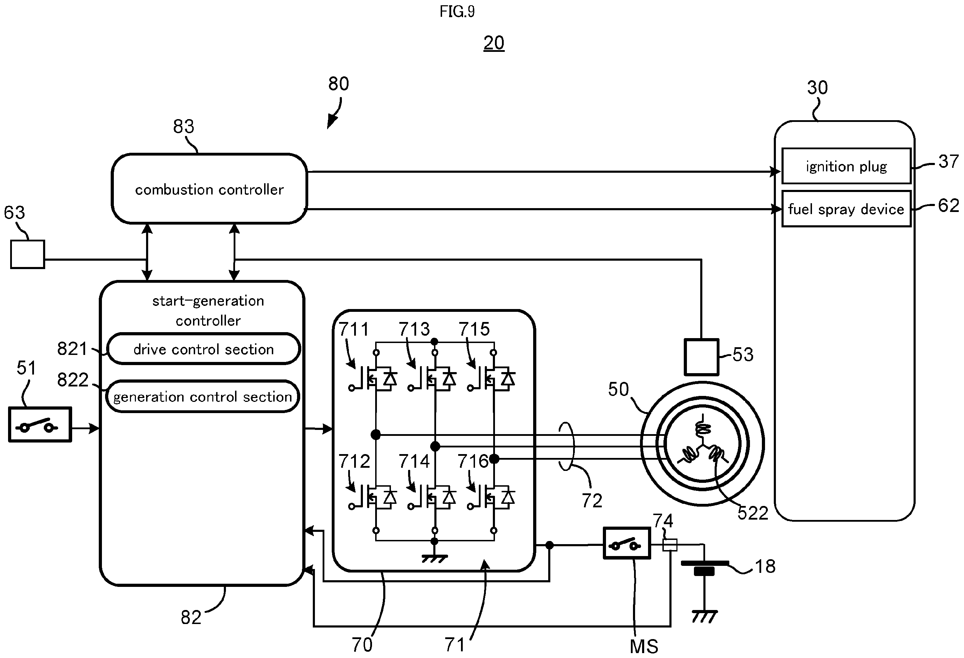

FIG. 9 is a block diagram schematically showing the electrical configuration of the engine unit 20 shown in FIGS. 3 and 4. FIG. 9 additionally shows a battery 18 and a main switch MS that are electrically connected to the engine unit 20.

The control unit 80 for the engine unit 20 includes a combustion controller 83 and a start-generation controller 82. The start-generation controller 82 of the control unit 80 controls the motor driver 70.

The brushless motor 50 and the battery 18 are connected to the motor driver 70. When the brushless motor 50 works as a motor, the battery 18 supplies electric power to the brushless motor 50. The battery 18 is charged with electric power generated by the brushless motor 50.

The motor driver 70 includes an inverter 71. The inverter 71 controls the current flowing between the battery 18 and the brushless motor 50. The inverter 71 includes a plurality of switches 711 to 716. The inverter 71 is a three-phase bridge inverter.

Each of the switches 711 to 716 includes a switching element. The switching element is, for example, a transistor, and more specifically, an FET (field effect transistor).

Each of the plurality of the switches 711 to 716 is connected to the stator wires 522 in one of the plurality of phases. Specifically, the plurality of switches 711 to 716 form half bridges, each of which is formed by a serial connection between two of the switches 711 to 716. The half bridges for different phases are connected to the battery 18 in parallel. In this way, the switches 711 to 716 form half bridges for different phases, and each pair of switches 711 to 716 forming a half bridge is connected to the stator wires 522 in each of the different phases.

The inverter 71 regulates the current flowing between the battery 18 and the brushless motor 50. Specifically, the switches 711 to 716 of the inverter 71 switch on and off the electrical connection between the battery 18 and the stator wires 522 in different phases.

More specifically, when the brushless motor 50 works as a motor, energization and de-energization of the stator wires 522 in each of the different phases are controlled by turning on and off of the switches 711 to 716.

When the brushless motor 50 works as an electric generator, the electrical connection between the stator wires 522 in each of the different phases and the battery 18 is switched on and off by turning on and off of the switches 711 to 716. By turning on and off the switches 711 to 716 in order, rectification and voltage control of the three-phase AC outputted from the brushless motor 50 are carried out. In this way, the switches 711 to 716 control the current outputted from the brushless motor 50 and flowing to the battery 18.

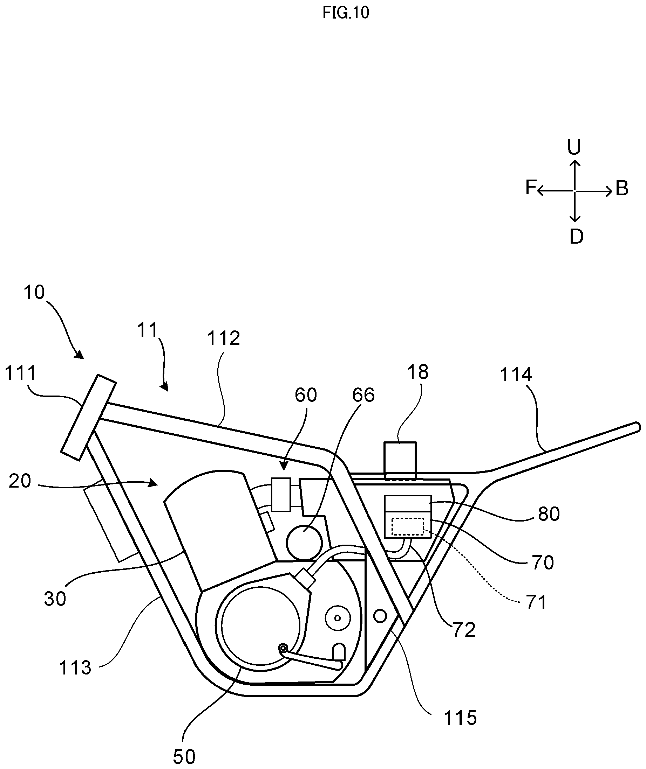

FIG. 10 is an enlarged left side view of the frame 11 and the engine unit 20 of the vehicle body 10 shown in FIG. 1. As shown in FIGS. 9 and 10, the brushless motor 50 and the motor driver 70 of the engine unit 20 are connected to each other by an electric cable 72. The electric cable 72 includes a core wire made of a conductor, a coating over the core wire, and a tube covering the coating. Since the electric cable 72 is structured this way, it is possible to easily check on damage of the electric cable 72 by checking on damage of the tube. The coating is made of an uncolored material, and the tube is made of a colored material. Since the tube is made of a colored material, there can be an improvement in the visibility of the motor driver 70 relative to the electric cable 72, it is possible to easily check on damage of the electric cable 72. Also, since the uncolored coating of the electric cable 72 is covered with the colored tube, it is easy to check on damage of the tube. Accordingly, the straddled vehicle 1 can be fixed without the electric cable 72 touched or damaged, for example, during an exchange of components around the electric cable 72. Thus, the straddled vehicle 1 is improved in maintainability. Further, the electric cable 72 is located in such a manner as not to overlap the canister 66 when viewed from a leftward (L) or rightward (R) position. Accordingly, in the straddled vehicle 1, the electric cable 72 is prevented from protruding in the left-right direction LR.

Referring back to FIG. 9, the main switch MS starts and stops the supply of electric power to the control unit 80 in accordance with the driver's operation.

The combustion plug 37, the fuel spray device 62 and the battery 18 are connected to the control unit 80. Additionally, the rotor position detector 53 is connected to the control unit 80. The control unit 80 receives a signal from the rotor position detector 53 and thereby acquires information on the position of the rotor 51 in the brushless motor 50. The control unit 80 controls the inverter 71 according to the position of the rotor 51.

The control unit 80 includes a start-generation controller 82 and a combustion controller 83. The start-generation controller 82 and the combustion controller 83 of the control unit 80 control the engine 30 and the brushless motor 50.

The start-generation controller 82 includes a drive control section 821 and a generation control section 822. The drive control section 821 starts the engine 30. The drive control section 821 controls the motor drive 70 such that the brushless motor 50 rotates the crankshaft 34. When the brushless motor 50 rotates the crankshaft 34, the engine 30 starts. The generation control section 822 sets off electric generation of the brushless motor 50. The generation control section 822 controls the motor driver 70 such that the brushless motor 50 generates electricity. When the brushless motor 50 generates electricity, the battery 18 is charged.

The drive control section 821 and the generation control section 822, that is, the start-generation controller 82 turns on or off each of the switches 711 to 716 of the motor driver 70 and thereby controls the operation of the brushless motor 50. The start-generation controller 82 determines the position of the rotor 51 of the brushless motor 50 based on a change of the electric signal sent from the rotor position detector 53. The start-generation controller 82 controls the switches 711 to 716 in accordance with the position of the rotor 51. In this way, the start-generation controller 82 controls the rotation of the brushless motor 51. The start-generation controller 82 turns on and off the switches 711 to 716 not at predetermined timing but in accordance with the position of the rotor 51 detected by the rotor position detector 53. In other words, the start-generation controller 82 performs feedback control based on the position of the rotor 51 in turning on and off the switches 711 to 716.

The combustion controller 83 controls the combustion plug 37 and the fuel spray device 62 to control the combustion in the engine 30. The combustion controller 83 controls the combustion plug 37 and the fuel spray device 62 and thereby adjusts the rotative force of the engine 30. The combustion controller 83 controls the combustion plug 37 and the fuel spray device 62 in accordance with the degree of opening of the throttle valve SV.

As shown in FIG. 4, the control unit 80 is a computer having a central processing unit 80a and a storage device 80b. The central processing unit 80a performs arithmetic processing based on a control program. The storage section 80b stores the program and data about the arithmetic processing therein.

The start-generation controller 82, which includes the drive control section 821 and the generation control section 822, and the combustion controller 83 are realized by the central processing unit 80a and the control program that is stored in the storage device 80b and carried out in the central processing unit 80a. Therefore, the operation of the start-generation controller 82, which includes the drive control section 821 and the generation control section 822, and the operation of the combustion controller 83 are considered as operation of the control unit 80. The start-generation controller 82 and the combustion controller 83 may be structured as different devices and located in separate places, or alternatively may be structured as one body.

### List of Reference Signs

1: straddled vehicle
10: vehicle body
11: frame
12: front fork
13: rear arm
14: front wheel
15: rear wheel
16: fuel tank
17: seat
18: battery
20: engine unit
25: radiator
30: engine
31: crankcase
32: cylinder
34: crankshaft
36: piston
40: manual transmission
41: manual clutch
42: input shaft
43: output shaft
50: brushless motor
60: air-intake system
65: air cleaner
66: canister
70: motor driver
80: control unit

## Claims

1. An MT straddled vehicle comprising:
a frame;
a fuel tank provided to the frame;
a multistage transmission that changes a gear ratio in multiple steps in accordance with operation;
an engine including: a piston; a crankshaft; a cylinder having a cylinder bore in which the piston is located in such a manner as to be capable of reciprocating motion; and a crankcase that is connected to the cylinder and encases the crankshaft and the multistage transmission, the engine being provided to the frame in such a manner that the cylinder is in an upright posture;
an air-intake system through which intake air is supplied to the engine;
a canister that temporarily stores vaporized fuel generated by fuel vaporization in the fuel tank and supplies the vaporized fuel to the engine; and
a starter motor that starts the engine,
wherein:
the starter motor is located at one end of the crankshaft and additionally functions as a generator that generates electricity when driven by the engine; and
the canister is located in such a manner that at least part of the canister is in a region enclosed by the crankcase, the cylinder and the air-intake system when viewed along a crankshaft axial direction and said part of the canister is on a centerline when the MT straddled vehicle is viewed downward from above, the centerline being a line passing through a center of the MT straddled vehicle with respect to a vehicle width direction and extending in a forward-backward direction.

2. The MT straddled vehicle according to claim 1, further comprising a rear arm that is supported by the frame in such a manner as to be swingable, wherein:
the frame includes a pivot that supports the rear arm; and
the air-intake system has a front part that is more frontward than a line passing through the pivot with respect to the forward-backward direction of the MT straddled vehicle; and when viewed along the crankshaft axial direction, the canister is located more downward than a lower contour line of the front part.

3. The MT straddled vehicle according to claim 1 or 2, wherein:
the cylinder includes a cylinder body and a cylinder head; and
the canister is located in such a manner that when viewed along the crankshaft axial direction, at least part of the canister is more downward than a line passing through the rear end, with respect to the forward-backward direction of the MT straddled vehicle, of the boundary between the cylinder head and the cylinder body and extending in the forward-backward direction.

4. The MT straddled vehicle according to any one of claims 1 to 3, wherein:
the air-intake system includes an air cleaner; and
the canister is located in such a manner that when the MT straddled vehicle is viewed downward from above, at least part of the canister is overlapped by the air cleaner.

5. The MT straddled vehicle according to any one of claims 1 to 4, wherein:
the canister has a shape having a longitudinal direction and a lateral direction; and
the canister is located in the region enclosed by the crankcase, the cylinder and the air-intake system when viewed along the crankshaft axial direction in such a manner that the longitudinal direction of the canister is same or substantially same as the crankshaft axial direction.

6. The MT straddled vehicle according to any one of claims 1 to 4, wherein:
the frame includes at least a main frame; and
when viewed along the crankshaft axial direction, the canister is located more frontward than the front contour line of the main frame.

7. The MT straddled vehicle according to any one of claims 1 to 6, wherein the engine is a water-cooled engine.

8. The MT straddled vehicle according to any one of claims 1 to 7, wherein the engine includes a balancer that is located more frontward than a vertical line passing through the crankshaft axis when the MT straddled vehicle is viewed along the crankshaft axial direction.

9. The MT straddled vehicle according to any one of claims 1 to 8, further comprising:
a motor driver that supplies electric power to the starter motor; and
an electric cable that connects the motor driver and the starter motor,
wherein the electric cable is located in such a manner as not to overlap the canister when the straddled vehicle is viewed along the crankshaft axial direction.

10. The MT straddled vehicle according to claim 9, wherein the electric cable includes: a core wire made of a conductor; a coating over the core wire; and a tube covering the coating.

11. The MT straddled vehicle according to claim 10, wherein:
the coating is made of an uncolored material; and
the tube is made of a colored material.

12. The MT straddled vehicle according to any one of claims 1 to 11, wherein the starter motor includes:
a stator including a stator core and windings of plural phases, the stator core having plural teeth circumferentially arranged such that the plural teeth and slots locate alternately, the windings being wound around the plural teeth; and
a rotor including a permanent magnetic section that has the magnetic pole parts being arranged circumferentially so as to oppose the stator via a gap, a number of magnetic pole parts being greater than 2/3 the number of the slots.

13. The MT straddled vehicle according to claim 12, wherein:
the crankcase is configured in such a manner that the inside thereof is lubricated with oil; and
the rotor of the starter motor includes no fans or fins that create an airflow for cooling, and is located in contact with the oil.

14. The MT straddled vehicle according to any one of claims 1 to 12, wherein the starter motor includes:
a cooling air inlet and a cooling air outlet; and
a rotor including a fan or a fin that creates an airflow, for cooling, from the cooling air inlet to the cooling air outlet.

15. The MT straddled vehicle according to any one of claims 1 to 14, wherein:
the starter motor is an outer-rotor-type motor; and
the rotor of the starter motor is shaped like a cylinder with a base, and is connected to the crankshaft at a place between the stator of the starter motor and the cylinder with respect to the crankshaft axial direction.

16. The MT straddled vehicle according to any one of claims 1 to 15, wherein the starter motor assists engine output.

17. The MT straddled vehicle according to any one of claims 12 to 16, wherein the starter motor includes a rotor position detector that is a pickup coil.

18. The MT straddled vehicle according to any one of claims 1 to 17, wherein the engine is a single-cylinder engine, a multi-cylinder parallel engine or a multi-cylinder V engine.
